# EUROPEAN PATENT APPLICATION

(11) **EP 2 620 528 A1**
(43) Date of publication of application: **31.07.2013**
(21) Application number: 11826921.6
(22) Date of filing: 22.09.2011
(51) Int. Cl.: C23G 1/24, B29C 65/00, B29C 70/00, B60C 9/00, B62D 55/253, B65G 15/34, D07B 1/06, F16F 15/04

(54) **METHOD OF MANUFACTURING RUBBER-METAL COMPOSITE, RUBBER-METAL COMPOSITE, TIRE, BASE ISOLATION RUBBER SUPPORT BODY, INDUSTRIAL-USE BELT, AND CRAWLER**

(30) Priority: 24.09.2010 JP 2010214341
(71) Applicant: Bridgestone Corporation, Tokyo 104-8340 (JP)
(72) Inventor: TOYOSAWA, Shinichi, Tokyo 104-8340 (JP)
(74) Representative: Lamb, Martin John Carstairs
(86) International application number: PCT/JP2011/071704
(87) International publication number: WO 2012/039476

(57) **Abstract**

A method of manufacturing a rubber-metal composite, the method including a process of bringing a metal material into contact with a buffer solution having a pH of from 5 to 7.2, followed by a process of causing the metal material and rubber to adhere to each other.

## Description

### Technical Field

The present invention relates to a method of manufacturing a rubber-metal composite, a rubber-metal composite, a tire, a base-isolation rubber bearing-body, an industrial belt, and a crawler.

### Background Art

In a method of embedding a metal material in rubber, for the purpose of strengthening the adhesion between the rubber and the metal material, a technique of treating the surface of the metal material with an acidic or alkaline solution, acetone, or the like, to clean the surface is known.
For example, Japanese Patent Application Laid-Open (JP-A) No. 2001-234371 discloses a technique of washing a surface of a steel wire with a strong acid such as an aqueous solution of phosphoric acid. Further, JP-A No. 2001-260235 discloses a technique of bringing a surface of a steel plate into contact with a processing agent containing a metal ion and an acid, to form a coating layer, and immersing the resulting steel plate in a hydrochloric acid bath to peel off the coating layer.
In addition, JP-A No. 2009-091691 discloses a technique of washing a steel wire, which has been subjected to brass plating, with an aqueous solution containing a salt of a transition metal other than copper or zinc.

### SUMMARY OF INVENTION

### Technical Problem

However, in each of the techniques described in JP-A No. 2001-234371 and JP-A No. 2001-260235, a strong acid is used for washing or peeling, and since strong acids have high corrosiveness, when the strong acid remains on the metal surface, corrosion tends to develop. Further, there are cases in which the strong acid exerts influence on the characteristics of the metal surface to deteriorate the durability of adhesion to rubber or storage stability (adhesion property after treating and leaving).
Further, in the technique described in JP-A No. 2009-091691, in the aqueous solution to be used for washing, a salt of a transition metal other than copper or zinc is an essential component. From the viewpoint of stability in supplying the solution for washing or the environmental load, development of a technique for the improvement in adhesion properties between rubber and a metal material, without needing a salt of a transition metal other than copper or zinc, has been anticipated.

An object of the invention is to provide a method of manufacturing a rubber-metal composite which exhibits excellent initial adhesion property, moisture and heat resistant adhesion property, and adhesion durability, between rubber and a metal material.
Another object of the invention is to provide a rubber-metal composite which exhibits excellent initial adhesion property, moisture and heat resistant adhesion property, and adhesion durability, between rubber and a metal material.
Moreover, yet another object of the invention is to provide a tire and a base-isolation rubber bearing-body, each of which are equipped with the rubber-metal composite, as well as an industrial belt and a crawler, each of which are produced by using the rubber-metal composite.

### Solution to Problem

Specific means for achieving the above objects are as follows.
<1> A method of manufacturing a rubber-metal composite, the method comprising:
   a process of bringing a metal material into contact with a buffer solution having a pH of from 5 to 7.2;
   followed by a process of causing the metal material and rubber to adhere to each other.
<2> The method of manufacturing a rubber-metal composite according to <1>, wherein the buffer solution is a liquid that does not substantially comprise a transition metal.
<3> The method of manufacturing a rubber-metal composite according to <1> or <2>, wherein the buffer solution has a pH of from 5.2 to 7.0.
<4> The method of manufacturing a rubber-metal composite according to any one of <1> to <3>, wherein the buffer solution includes at least one acid selected from the group consisting of acids having an acid dissociation constant pKa of from 4 to 8.
<5> A rubber-metal composite manufactured by the method of manufacturing a rubber-metal composite according to any one of <1> to <4>.
<6> A tire equipped with the rubber-metal composite according to <5>.
<7> A base-isolation rubber bearing-body equipped with the rubber-metal composite according to <5>.
<8> An industrial belt produced by using the rubber-metal composite according to <5>.
<9> A crawler produced by using the rubber-metal composite according to <5>.

### Advantage Effects of Invention

According to the invention, a method of manufacturing a rubber-metal composite which exhibits excellent initial adhesion property, moisture and heat resistant adhesion property, and adhesion durability, between rubber and a metal material can be provided.
Further, according to the invention, a rubber-metal composite which exhibits excellent initial adhesion property, moisture and heat resistant adhesion property, and adhesion durability, between rubber and a metal material, can be provided.
Moreover, according to the invention, a tire and a base-isolation rubber bearing-body, each of which are equipped with the rubber-metal composite, as well as an industrial belt and a crawler, each of which are produced by using the rubber-metal composite, can be provided.

### DESCRIPTION OF EMBODIMENTS

Hereinafter, an embodiment of the invention is described. The descriptions and Examples illustrate the present invention by an example, and do not limit the scope of the present invention.
In the present specification, a numerical range expressed using "to" refers to a range including the numerical value described before and after "to" as the minimum and maximum values, respectively.

### <Method of Manufacturing Rubber-Metal Composite>

The method of manufacturing a rubber-metal composite of the present invention includes a process of bringing a metal material into contact with a buffer solution having a pH of from 5 to 7.2, followed by a process of causing the metal material and rubber to adhere to each other.
According to the method of manufacturing a rubber-metal composite of the present invention, adhesion properties between rubber and a metal material can be enhanced, so that initial adhesion property, moisture and heat resistant adhesion property, and adhesion durability are excellent.
Further, according to the method of manufacturing a rubber-metal composite of the present invention, the metal material is less likely to be corroded and the durability of the metal material is good.

In the method of manufacturing a rubber-metal composite of the present invention, the mechanism of the enhancement of adhesion properties between rubber and a metal material may not be restricted to a specific theory, but is assumed as follows.
In metal materials, for handling convenience and for protection of metal from corrosion, there are cases in which a lubricant and an anti-rust agent are adhered to the surfaces of the metal materials. It is thought that the lubricant and the anti-rust agent form a coating film, which disturbs the adhesion between the metal material and rubber. Further, when a metal material has a plated layer on its surface, it is thought that an oxide of a metal, such as copper or zinc, which constitutes the plated layer, forms a coating film on the surface of the metal material, and the coating film disturbs the adhesion between the metal material and rubber. Consequently, the adhesion properties between a metal material and rubber is enhanced by removing at least a portion of a coating film as described above, which exists on the surface of the metal material.
In the method of manufacturing a rubber-metal composite of the present invention, it is thought that, by pre-treating a surface of a metal material using a buffer solution having a pH of from 5 to 7.2, at least a portion of a coating film that exists on the surface of the metal material is removed, and the surface of the metal material is appropriately activated to a state suitable for adhesion to rubber, and therefore, the initial adhesion property between the metal material and rubber is enhanced.
Further, in the method of manufacturing a rubber-metal composite of the present invention, since the buffer solution hardly exerts adverse influence on the surface of the metal material, the moisture and heat resistant adhesion property and adhesion durability are also good.

Hereinafter, the process of bringing a metal material into contact with a buffer solution (which is referred to as "surface treatment process") and the process, following the contact, of causing the metal material and rubber to adhere to each other (which is referred to as "adhesion process") are described in detail.

### [Surface Treatment Process]

The surface treatment process is a process of bringing a surface of a metal material into contact with a buffer solution having a pH of from 5 to 7.2. It is thought that, by performing this process, at least a portion of a coating film that exists on the surface of the metal material is removed, and the surface of the metal material is appropriately activated to a state suitable for adhesion to rubber.

Examples of a method of bringing a surface of a metal material into contact with the buffer solution include a method of spraying the buffer solution to a metal material, and a method of immersing a metal material in the buffer solution.
The surface treatment process may be carried out plural times. For example, the operation of spraying the buffer solution to a metal material may be repeated for plural times, or after immersing a metal material in the buffer solution, the metal material may be washed with water or the like, and immersed in the buffer solution again.

### (Buffer Solution)

In the present invention, a buffer solution having a pH of from 5 to 7.2 is used as a treatment liquid for surface treatment of a metal material. When rubber-metal composites have been manufactured sequentially, or when a metal material has been immersed in a treatment liquid, followed by washing with water or the like and immersion in the treatment liquid again, there are cases in which the pH of the treatment liquid varies due to elution of metal from the surface of the metal material or the mixing in of water. When the above buffer solution is used as the treatment liquid for surface treatment of a metal material, the pH hardly varies, which is therefore advantageous.

The pH of the buffer solution is from 5 to 7.2. When the pH of the buffer solution exceeds 7.2, removal of a coating film that exists on the surface of the metal material is difficult, and the initial adhesion property between rubber and the metal material is not good. Meanwhile, when the pH of the buffer solution is lower than 5, adverse influence is exerted on the surface of the metal material, and the moisture and heat resistant adhesion property and the adhesion durability are deteriorated. Further, when the pH of the buffer solution is lower than 5, the metal material tends to be corroded, and the durability of the metal material is deteriorated.
From the viewpoints of adhesion properties between rubber and a metal material and durability of a metal material, the pH of the buffer solution is preferably from 5.2 to 7.0, more preferably from 5.4 to 6.8, and even more preferably from 6.0 to 6.8. When the pH of the buffer solution is from 6.0 to 6.8, storage stability (adhesion property after treat-leaving) is also good.

The buffer solution contains at least one acid. The acid included in the buffer solution is not particularly limited. From the viewpoints of adhesion properties between rubber and a metal material and durability of a metal material, a weak acid is preferable, an acid having an acid dissociation constant (pKa) of from 4 to 8 is preferable, and examples thereof include acetic acid, phosphoric acid, phthalic acid, succinic acid, citric acid, and carbonic acid. Among them, acetic acid and phosphoric acid are preferable. The acids may be used alone or as a mixture of two or more thereof.

Specific examples of the buffer solution include an acetic acid-sodium acetate buffer solution, a sodium dihydrogen phosphate-disodium hydrogen phosphate buffer solution, a potassium hydrogen phthalate-sodium hydroxide buffer solution, a sodium citrate-sodium hydroxide buffer solution, and a succinic acid-sodium tetraborate buffer solution. Among them, an acetic acid-sodium acetate buffer solution and a sodium dihydrogen phosphate-disodium hydrogen phosphate buffer solution are preferable.

As the metal component included in the buffer solution, sodium or potassium is preferable. It is preferable that other metal, especially a transition metal, is not substantially contained in the buffer solution, from the viewpoint of ease of adjustment of the pH of the buffer solution or from the viewpoint of ease of effluent treatment of the buffer solution after the completion of use or the like. Namely, it is preferable that the buffer solution does not substantially contain a transition metal.
Here, the expression "does not substantially contain" means that the concentration of the transition metal in the buffer solution is less than 0.01 mol/L. In the present invention, the concentration of the transition metal in the buffer solution is preferably 0.005 mol/L or less, and particularly preferably 0 mol/L.
Further, the "transition metals" refer to metal elements from scandium (Sc) to zinc (Zn) in the fourth period, from yttrium (Y) to cadmium (Cd) in the fifth period, and from lutetium (Lu) to mercury (Hg) in the sixth period, of the periodic table. Typical examples of the transition metal include cobalt.

The buffer solution may be prepared by adding, as needs arise, an inorganic salt, alcohol, or the like, to the extent that the effects of the invention are not impaired.

The contact time of the metal material with the buffer solution (which is referred to as "surface treatment time") may be appropriately changed according to the pH of the buffer solution, and is generally in a range of from 0.5 seconds to 20 seconds, and preferably from 1 second to 15 seconds.
When the pH of the buffer solution is low, the surface treatment time can be shortened. When the pH of the buffer solution is high, the surface treatment time can be prolonged. In other words, when the pH of the buffer solution is high, the degree of surface treatment of the metal material can be readily changed by adjusting the surface treatment time.
Further, the temperature of the buffer solution is preferably from 10°C to 40°C, and more preferably from 15°C to 30°C.

### (Metal Material)

The metal material used in the method of manufacturing a rubber-metal composite of the present invention is a metal material for adhering to rubber and is a metal material having a plated layer on the surface thereof.
In the method of manufacturing a rubber-metal composite of the present invention, since the surface of the metal material is chemically processed by using a buffer solution having a pH of from 5 to 7.2, the plated layer is not subjected to wear or chipping, and therefore, corrosion of metal due to exposure of the base metal is less likely to occur.
Further, since the buffer solution hardly exerts adverse influence on the plated layer, adverse influence is hardly exerted on the adhesion properties between rubber and the metal material.

Specific examples of the metal material include metal materials having a plated layer such as zinc plating, copper plating, bronze plating, brass plating, or the like, on the surface of the metal material formed from a metal such as iron, steel (stainless steel), lead, aluminum, copper, brass, bronze, a Monel metal alloy, nickel, zinc, or the like. From the viewpoint of appropriately activating the surface by using the buffer solution to enhance the adhesion properties with respect to rubber, the metal material preferably has, as the plated layer, a bronze plated layer or a brass plated layer, and particularly preferably a brass plated layer.
Examples of a form of the metal material include a metal steel wire, a metal plate, and a metal chain.

### - Metal Steel Wire -

The "metal steel wire" generally refers to a wire-like metal including steel, namely, iron, as a main component (the mass of iron with respect to the total mass of the metal steel wire exceeds 50% by mass), and may be constituted by iron alone, or may include a metal other than iron, for example, zinc, copper, aluminum, tin, or the like.
Regarding the plated layer on the surface of the metal steel wire, the type of plating processing is not particularly limited, and examples include zinc plating, copper plating, bronze plating, and brass plating. The surface of the metal steel wire having a plated layer indicates that iron is not exposed on the surface of the metal steel wire and that plating processing, such as zinc plating, copper plating, bronze plating, or brass plating is performed with respect to an iron wire (iron 100% by mass) or a metal wire including iron. Note that, when plating has been performed on an iron wire, the iron wire having a surface with a plated layer is called a metal steel wire. Further, when plating has been performed on a metal wire including iron, the metal wire having a surface with a plated layer is called a metal steel wire.
Among the above-described types of plating, brass plating is preferable. In a metal steel wire having brass plating, the surface is appropriately activated when contacting the buffer solution, to improve adhesion properties with respect to rubber.
Note that "*Shinchu mekki*" is also referred to as a brass plating, and the ratio of copper and zinc (copper : zinc) is generally from 60 : 40 to 70 : 30 on the basis of mass. Further, the layer thickness of the brass plated layer is generally from 100 nm to 300 nm.

The wire diameter of the metal steel wire is preferably from 0.1 mm to 5.5 mm. Here, the "wire diameter of the metal steel wire" refers to the longest length in the shape of the cross section which is perpendicular to the axis line of the metal steel wire. The shape of the cross section which is perpendicular to the axis line of the metal steel wire is not particularly limited, and may be an oval shape, a rectangular shape, a triangular shape, a polygonal shape, or the like, but is generally a round shape.
Concerning steel cords used in carcasses or belts of fires, the shape of the cross section which is perpendicular to the axis line of a wire in a filament that constitutes a steel cord is generally a round shape, and the wire diameter of the cross-sectional shape is generally from 0.1 mm to 0.5 mm. Further, concerning bead cores, the shape of the cross section which is perpendicular to the axis line of a bead core is generally a round shape, and the wire diameter of the cross-sectional shape is generally from 1 mm to 1.5 mm.
Accordingly, when the wire diameter of the metal steel wire according to the invention is within the above range, the metal steel wire according to the invention may be readily applied to tires.
The wire diameter of the metal steel wire is more preferably from 0.15 mm to 5.26 mm.

### [Adhesion Process]

The adhesion process is a process of causing the metal material, which has been subjected to a surface treatment by contacting the buffer solution described above, and rubber to adhere to each other. Generally, in the adhesion process, a rubber and a metal material are vulcanization-adhered to each other under application of pressure and heat.
The pressure and temperature in the vulcanization adhesion between the rubber and the metal material may be a pressure and temperature generally used in vulcanization adhesion. For example, the pressure is preferably from about 2 MPa to about 15 MPa, and more preferably from about 2 MPa to about 5 MPa. The temperature is preferably from about 140°C to about 200°C, and more preferably from about 150°C to about 170°C. The amount of time for applying pressure and heat is appropriately selected depending on the thickness of the rubber, and is preferably from about 3 minutes to about 60 minutes.

### (Rubber)

The term "rubber" used in this specification is a term that includes a rubber alone and also a rubber composition produced by adding sulfur, a vulcanizing agent, or the like to a rubber.
Examples of the rubber alone or the rubber included in the rubber composition include olefin synthetic rubbers including polychloroprene, polybutadiene, Neoprene (registered tradename), styrene-butadiene copolymer rubber, acrylonitrile-butadiene copolymer rubber, ethylene-propylene copolymer rubber, ethylene-propylene-diene terpolymer rubber, butyl rubber, bromide butyl rubber, alkylated chlorosulfonated polyethylene, and the like, and natural rubbers.

The rubber composition may contain, other than rubber, additives, such as a vulcanizing agent such as sulfur or zinc white; a vulcanization accelerator such as N-cyclohexyl-2-benzothiazylsulfenamide; a vulcanizing aid such as stearic acid; an anti-aging agent such as N-phenyl-N'-(1,3-dimethyl)-p-phenylenediamine; or a filler such as carbon black. The rubber and one or more of the above additives are kneaded and molded arbitrarily, by using known methods and devices, to obtain a rubber composition.

When the rubber composition is applied to a pneumatic tire, an industrial belt, or the like, the rubber composition is preferably a substance obtained by including sulfur in an amount of from 1 part by mass to 10 parts by mass with respect to 100 parts by mass of a rubber component. When the amount of sulfur is 1 part by mass or more, the adhesive force of original vulcanization adhesion between sulfur and rubber can be sufficiently ensured. Meanwhile, when the amount of sulfur is 10 parts by mass or less, thermal aging resistance and heat resistant adhesion characteristics in rubber physical properties is good.

Conventionally, a technique for adding a cobalt salt to rubber has been known, in order to improve the initial adhesion property between the rubber and a metal material (especially, a metal material having a brass plated layer). However, regarding the rubber including a cobalt salt, there are cases in which the degradation resistance and crack growth resistance of rubber are deteriorated, as compared to a rubber that does not include a cobalt salt.
According to the method of manufacturing a rubber-metal composite of the present invention, the initial adhesion property between rubber and a metal material is good, also when a rubber does not include a cobalt salt.

### [Other Process]

The method of manufacturing a rubber-metal composite of the present invention may further include a washing process of washing the metal material, which has been brought into contact with the buffer solution, with water.
In the present invention, since the buffer solution hardly causes corrosion of the metal material and hardly exerts adverse influence on the plated layer, it is not particularly necessary to further provide a washing process. However, if there is any possibility that the buffer solution remaining on the surface of the metal material may cause corrosion of the metal material or the buffer solution may exert adverse influence on the plated layer, it is preferable to provide a washing process, from the viewpoints of durability of the metal material and the like.
The water to be used in the washing process may be either ion-exchanged water or tap water, but ion-exchanged water is preferable.

### <Rubber-Metal Composite>

The rubber-metal composite of the present invention is a rubber-metal composite manufactured by the above-described method of manufacturing a rubber-metal composite of the present invention. Namely, the rubber-metal composite of the present invention is a substance obtained by causing a metal material, whose surface has been processed by contacting a buffer solution having a pH of from 5 to 7.2, and rubber to adhere to each other.
The surface of the metal material is processed by using the above buffer solution, and therefore, the rubber-metal composite of the present invention exhibits excellent initial adhesion property, moisture and heat resistant adhesion property, and adhesion durability, between rubber and a metal material. Further, in the rubber-metal composite of the present invention, since the buffer solution hardly causes corrosion of the metal material, the durability of the metal material is hardly impaired.

Details and preferable embodiments of the rubber and the metal material in the rubber-metal composite of the present invention are as described in the method of manufacturing a rubber-metal composite of the present invention.

The rubber-metal composite of the present invention can be widely applied as various products of rubber-metal composites, or parts of various products equipped with a rubber-metal composite.
Examples of the various products or parts include tires, industrial belts such as a power transmission belt and a conveyer belt, crawlers which are made of rubber and are mounted on endless track drive devices used for bulldozers or the like, base isolation rubber bearing bodies, and hoses. Known configurations can be employed as-is in these various products and parts, and the method of manufacturing a rubber-metal composite of the present invention is applied to the manufacture of the composites of a rubber and a metal material, which are used in these various products and parts.

An industrial belt or a crawler is generally manufactured by wrapping an unvulcanized rubber around a steel cable or an unvulcanized rubber-coated steel cable, followed by vulcanization and molding. The rubber-metal composite of the present invention is suitable as an industrial belt or a crawler, in which a steel cable is embedded and each of which is manufactured in a manner as described above.
A base-isolation rubber bearing-body is generally a laminate obtained by alternately laminating a rubber sheet and a hard plate such as a steel plate, and is used for the bearing of a bridge, standard base isolation of a building, or the like. Generally, a metal material such as a metal chain is embedded in a rubber sheet. The rubber-metal composite of the present invention is suitable, for example, as a rubber sheet in a base-isolation rubber bearing-body which is applied to the use described above.

### <Tire>

The rubber-metal composite of the present invention exhibits excellent adhesion properties between rubber and a metal material, and the durability of a metal material is hardly impaired, and therefore, the rubber-metal composite of the present invention is suitable as a reinforcing material of a pneumatic tire (which is also referred to, simply, as "tire" in the specification).
When the rubber-metal composite of the present invention is used in the manufacture of a tire in which rubber and a metal material bears a large load in the running a car or the like, peeling is less likely to occur, since the adhesive strength between rubber and a metal material (specifically, a metal steel wire) is great and the adhesion durability is good.

Known configurations of a tire can be employed as-is in the tire equipped with the rubber-metal composite of the present invention. For example, the method of manufacturing a rubber-metal composite of the present invention can be employed in the manufacture of composites of a rubber and a metal steel wire such as a steel cord or a bead core, which are used in carcasses or belts.

### EXAMPLES

Hereinafter, the present invention is further specifically described with reference to Examples, but the scope of the present invention is not limited to these Examples. Unless otherwise stated, the "part(s)" is based on mass.

### (Preparation of Materials)

As the metal material and the rubber composition, the following materials were prepared.

### · Metal material

Brass plated steel wire (ductility: 3%, copper/zinc mass ratio in the plated layer = 63/37, wire diameter: 0.8 mm)

### · Rubber composition

100 parts of natural rubber, 60 parts of HAF carbon, 8 parts of zinc white, 2 parts of an anti-aging agent (NOCRAC 6C, manufactured by Ouchi Shinko Chemical Industrial Co., Ltd.), 1 part of a vulcanization accelerator (NOCCELER DZ, manufactured by Ouchi Shinko Chemical Industrial Co., Ltd.), and 5 parts of sulfur were kneaded according to a conventional method, followed by warming and extrusion, to obtain a rubber composition.

### (Preparation of Liquids Used for Surface Treatment)

### · Acetic acid-sodium acetate buffer solution

Sodium acetate (special grade chemical) was dissolved in ion-exchanged water to give a concentration of 0.1 mol/L, and acetic acid (special grade chemical) was added thereto to adjust the pH to the value described in Table 1 below, thereby preparing an acetic acid-sodium acetate buffer solution. In this process, preparation was conducted such that other ions were not substantially mixed into this buffer solution.

### · Sodium dihydrogen phosphate-disodium hydrogen phosphate buffer solution

Disodium hydrogen phosphate (special grade chemical) was dissolved in ion-exchanged water to give a concentration of 0.2 mol/L. Separately, sodium dihydrogen phosphate (special grade chemical) was dissolved in ion-exchanged water to give a concentration of 0.2 mol/L. The above liquids were mixed at a ratio of 1:1 to prepare a sodium dihydrogen phosphate-disodium hydrogen phosphate buffer solution having a pH of 6.6. In this process, preparation was conducted such that other ions were not substantially mixed into this buffer solution.

### · Sodium acetate solution

Sodium acetate (special grade chemical) was dissolved in ion-exchanged water to give a concentration of 0.1 mol/L to prepare a sodium acetate solution having a pH of 7.9. In this process, preparation was conducted such that other ions were not substantially mixed into this solution.

### [Examples 1 to 4 and Comparative Examples 1 to 4]

### (Surface Treatment of Metal Material)

In Examples 1 to 4 and Comparative Examples 1 to 3, steel wires were subjected to a surface treatment using the respective liquids shown in Table 1 below. Specifically, the steel wires prepared as described above were immersed in the respective liquids. The immersion time was 10 seconds, and the temperature of the respective liquids at the time of immersion was room temperature (25°C). Thereafter, the steel wires were washed with ion-exchanged water (washing time: 10 seconds), and immediately after the washing, the steel wires were dried using a dryer (room temperature, 25°C).
In Comparative Example 4, the steel wire was not subjected to a surface treatment using a liquid.

### (Adhesion between Metal Material and Rubber, and Evaluation)

### - Initial Adhesion Property -

Steel wires which had been surface-treated were arranged in parallel to each other at intervals of 12.5 mm, then the steel wires were coated with a rubber composition from above and below, and then vulcanization was performed at 160°C for 5 minutes, to cause the rubber and the steel wire to adhere to each other. In this way, a rubber-steel wire composite in which the steel wires were embedded in the rubber sheet having a thickness of 1 mm was obtained (the steel wires were arranged in parallel to each other at intervals of 12.5 mm on a surface of the rubber sheet in the center in a thickness direction of the rubber sheet).
Thereafter, based on a method according to ASTM D 2229, the steel wire was pulled out from each sample immediately after the vulcanization, and the coverage factor of the rubber adhering to the steel wire was visually observed and expressed on a scale of from 0% to 100%, as an index of the initial adhesion property. A higher numeric value indicates higher initial adhesion property, which means that adhesion between the rubber and the metal material is good. The evaluation results are shown in Table 1 below.

### - Moisture and Heat Resistant Adhesion Property -

Steel wires which had been surface-treated were arranged in parallel to each other at intervals of 12.5 mm, then the steel wires were coated with a rubber composition from above and below, and then vulcanization was performed at 160°C for 20 minutes, to cause the rubber and the steel wire to adhere to each other. In this way, a rubber-steel wire composite in which the steel wires were embedded in the rubber sheet having a thickness of 1 mm was obtained (the steel wires were arranged in parallel to each other at intervals of 12.5 mm on a surface of the rubber sheet in the center in a thickness direction of the rubber sheet).
The rubber-steel wire composite thus obtained was degraded at 70°C and 95% relative humidity for 14 days, and thereafter, based on a method according to ASTM D 2229, the steel wire was pulled out from each sample, and the coverage factor of the rubber adhering to the steel wire was visually observed and expressed on a scale of from 0% to 100%, as an index of the moisture and heat resistant adhesion property. A higher numeric value indicates higher moisture and heat resistant adhesion property, which means that adhesion between the rubber and the metal material is good. The evaluation results are shown in Table 1 below.

### - Adhesion Durability -

Steel wires that had been surface treated were arranged in parallel to each other at intervals of 12.5 mm, then the steel wires were coated with a rubber composition from above and below, and then, vulcanization was performed at 160°C for 20 minutes, to cause the rubber and the steel wire to adhere to each other. In this way, a rubber-steel wire composite in which the steel wires were embedded in the rubber sheet having a thickness of 1 mm was obtained (the steel wires were arranged in parallel to each other at intervals of 12.5 mm on a surface of the rubber sheet in the center in a thickness direction of the rubber sheet).
The rubber-steel wire composite thus obtained was left at 60°C and 80% relative humidity under an oxygen atmosphere for 7 days, and thereafter, based on a method according to ASTM D 2229, the steel wire was pulled out from each sample, and the coverage factor of the rubber adhering to the steel wire was visually observed and expressed on a scale of from 0% to 100%, as an index of the adhesion durability. A higher numeric value indicates higher adhesion durability, which means that adhesion between the rubber and the metal material is good. The evaluation results are shown in Table 1 below.

**TABLE 1**

| | Liquid Used for Surface Treatment | | Conditions for Treatment | | Adhesion Properties | | |
|---|---|---|---|---|---|---|---|
| | Composition | pH | Temperature | Duration | Initial Adhesion Property | Moisture and Heat Resistant Adhesion Property | Adhesion Durability |
| Example 1 | 0.1 N Acetic acid - sodium acetate | 6.6 | 25°C | 10 seconds | 70% | 90% | 100% |
| Example 2 | 0.1 N Acetic acid - sodium acetate | 5.2 | 25°C | 10 seconds | 80% | 90% | 90% |
| Example 3 | 0.1 N Acetic acid - sodium acetate | 7.0 | 25°C | 10 seconds | 50% | 90% | 90% |
| Example 4 | Disodium hydrogen phosphate - sodium dihydrogen phosphate | 6.6 | 25°C | 10 seconds | 70% | 90% | 100% |
| Comparative Example 1 | 0.1 N Acetic acid - sodium acetate | 4.7 | 25°C | 10 seconds | 80% | 40% | 30% |
| Comparative Example 2 | 0.1. N Acetic acid - sodium acetate | 7.4 | 25°C | 10 seconds | 30% | 40% | 60% |
| Comparative Example 3 | 0.1 N Sodium acetate | 7.9 | 25°C | 10 seconds | 10% | 30% | 30% |
| Comparative Example 4 | - | - | - | - | 10% | 30% | 30% |

As is evident from Table 1, the rubber-metal composites manufactured by the method of manufacturing a rubber-metal composite of the present invention exhibits excellent initial adhesion property, moisture and heat resistant adhesion property, and adhesion durability, between rubber and a metal material, as compared to the Comparative Examples.

The disclosure of Japanese Patent Application No. 2010-214341 filed on September 24, 2010, is incorporated by reference herein in its entirety.
All publications, patent applications, and technical standards mentioned in this specification are herein incorporated by reference to the same extent as if such individual publication, patent application, or technical standard was specifically and individually indicated to be incorporated by reference.

## Claims

1. A method of manufacturing a rubber-metal composite, the method comprising:
a process of bringing a metal material into contact with a buffer solution having a pH of from 5 to 7.2;
followed by a process of causing the metal material and rubber to adhere to each other.

2. The method of manufacturing a rubber-metal composite according to claim 1, wherein the buffer solution is a liquid that does not substantially comprise a transition metal.

3. The method of manufacturing a rubber-metal composite according to claim 1 or claim 2, wherein the buffer solution has a pH of from 5.2 to 7.0.

4. The method of manufacturing a rubber-metal composite according to any one of claim 1 to claim 3, wherein the buffer solution comprises at least one acid selected from the group consisting of acids having an acid dissociation constant pKa of from 4 to 8.

5. A rubber-metal composite manufactured by the method of manufacturing a rubber-metal composite according to any one of claim 1 to claim 4.

6. A tire equipped with the rubber-metal composite according to claim 5.

7. A base-isolation rubber bearing-body equipped with the rubber-metal composite according to claim 5.

8. An industrial belt produced by using the rubber-metal composite according to claim 5.

9. A crawler produced by using the rubber-metal composite according to claim 5.
